# EUROPEAN PATENT APPLICATION

(11) **EP 4 488 871 A1**
(43) Date of publication of application: **08.01.2025**
(21) Application number: 23183297.3
(22) Date of filing: 04.07.2023
(51) Int. Cl.: G06F 30/20, G06F 113/06

(54) **FEATURE EXTRACTION AND PATTERN RECOGNITION OF DYNAMIC CHARACTERISTICS IN WIND TURBINES AND WIND POWER PLANTS AND THEIR GRID CONNECTION**

(71) Applicant: Siemens Gamesa Renewable Energy A/S, 7330 Brande (DK)
(72) Inventor: Gomes Guerreiro, Gabriel Miguel, 2800 Kongens Lyngby (DK); Martin, Frank, 2630 Taastrup (DK); Yang, Guangya, 2800 Lyngby (DK)
(74) Representative: SGRE-Association

(57) **Abstract**

The present invention relates to a method to generate a model to test and/or evaluate dynamic characteristics of especially wind turbines and/or wind turbine parks, the method comprising
- a step (20) of data sourcing and storage of input data (100) that includes a plural of records of at least one parameter to be used to generate the model,
- a step (30) of data processing (30) to transform the input data (100) into extracted features that includes a reduced number of records compared to the input data (100) but which are representative of the at least one parameter, and,
- a step (40) of models generation and evaluation including sub-steps 42, 44 to generate a set of multiple models and a sub-step 46 of selecting the best suitable of the models.

The present invention further relates to the processor or controller the be used in relation to a wind turbine or wind turbine park.

## Description

### BACKGROUND

The present invention relates to a method to test, evaluate, and model the validation of the dynamic characteristics of especially wind turbines or wind turbine parks.

The proper testing, evaluation, and model validation of for example the electrical characteristics of wind turbines connected to the grid are a crucial step of the development and grid integration of these products. Nowadays several standards (e.g., IEC61400-21 series, IEC21400-27 series, IEEE P2800, and etc) stipulate which electrical characteristics are important to be verified during the cycles of wind turbine developments.

Moreover, specific capability and performance features regarding these characteristics (known as grid code compliance) are required by Transmission System Operators (TSOs)

Requirements regarding e.g. electrical characteristics are constantly increasing and becoming more complex. As a result, grid compliance, grid integration aspects, wind park control etc. are becoming more complex when it comes to modelling, testing and validation.

Consequently, design and operation become more costly and time consuming. High fidelity simulation models, controllable testing environments, full-scale turbine testing and operational wind turbine monitoring are currently used to ensure grid compliance of wind turbines and wind parks throughout the design and operational lifecycles.

In relation to e.g. wind turbines, wind parks / wind farms, grid compliance context, etc., this invention can be the basis to solve technical problems and deliver different solutions of diverse natures.

The list of technical problems is non-exhaustive as the approach shown in this invention can be applied to several use cases.

### SUMMARY OF THE INVENTION

The object of the invention is achieved by the independent claims. The dependent claims describe advantageous developments and modifications of the invention.

This includes introducing a method to generate a model to test and/or evaluate characteristics of dynamic parameters related to wind turbines and/or wind turbine parks, the method comprising
- a step of data sourcing and storage of input data that includes a plural of records of at least one parameter to be used to generate the model,
- a step of data processing to transform the input data into extracted features that includes a reduced number of records compared to the input data but which are representative of the at least one parameter, and,
- a step of models generation and evaluation including sub-steps to generate a set of multiple models and a sub-step of selecting the best suitable of the models.

The method may be used in relation grid compliance related dynamic characteristic of wind turbines.

The method may be used on input data of electrical parameters with a fast dynamic, such as within order of minutes, seconds, milli-seconds, micro-seconds, or nano-seconds. This for a short sampling time still generates a large amount of input data records.

The input data may include records from fault or abnormal situations like fault-ride-trough, where the filters are applied to the records before, during and after the fault or abnormal condition.

The method may be used in relation to data originating from Fault Ride-Through (FRT) responses of wind turbines, phase-jumps, rate of frequency change among other dynamic characteristics.

For input data records sampled during fault or abnormal situations, the standard deviation and/or variance of the input data may be extracted from each window as part of the extracted features. During such transient events, the transient period minimum and maximum values of the event inception and event clearing may be extracted as part of the pieces of information data to be used in step.

The features may be prepared using (moving) average and/or median filters where a filter window covers a plural of input data records of at least one parameter, and where a filter window covering n records is used to create a series of averages of different selections of the full set of data records

The number of records in the filter window may be non-constant.

The method may use time-series of the positive and negative sequence of voltage to replicate the dynamic response of the wind turbine.

The set of models may be selected among a larger super-set of model types defined in the system operating the method (e.g. a memory for a processor of a wind turbine or wind turbine park, and/or a controller of the same).

Since not all e.g. machine learning model types are suitable for all tasks (also referred to as user cases) and all types of input data (all kinds of parameters etc.), multiple model types are made selectable from a super-set.

Making training a multiple of such model types allows the selection of the best suitable according to the task (user case).

In an embodiment one step of the method uses down-sampling, data splitting (split the data in several smaller pieces), FFT (Fast Fourier Transform) and other techniques on the outputted extracted features.

In an embodiment, if the input data includes records from fault or abnormal situations like fault-ride-trough, the filters are applied to the records before, during and after the fault or abnormal condition.

For transient events where the input data include records for fault or abnormal situations, the standard deviation and/or variance of the input data may be extracted from each window as part of the extracted features.

Alternatively, or additionally, for transient events where the input data includes records for fault or abnormal situations, the transient period minimum and maximum value input data of the event inception and event clearing is extracted as part of the extracted features.

The step of models generation and evaluation may be using a pattern recognition technique, such as machine learning.

The data processing step may include a sub-step of filtering the input data to remove noise.

The data processing step may include a sub-step of splitting the input data into sets of extracted features, a training set for the training in a sub-step to generate a set of multiple models, a validation set used in an error evaluation sub-step, and a testing set used in the sub-step of selecting the best suitable of the models.

The sub-step may further include a hyperparameter optimization procedure to generate the models, this e.g. is the method used in the sub-step to generate a set of multiple models.

The method may be used in the control of installed and running systems like wind turbines or wind farms by regularly... updating the model by forming a new model due to changes in conditions.

The method may be used to create a model to control a wind park, a grid connection and/or a wind turbine.

The present invention further relates to a controller or processor used in connection to a wind turbine and/or wind turbine park and adapted to use the method of any the previous embodiments.

### BRIEF DESCRIPTION OF THE DRAWINGS

Embodiments of the invention are now described, by way of example only, with reference to the accompanying drawings, of which:
- Figure 1: A presentation of steps and sub-steps according used in the method of the present invention.
- Figure 2: Filtering input data by a window
- Figures 3A, 3B: Input data during transients, such as a fault or error situation of e.g. a wind turbine

The illustration in the drawings is in schematic form. It is noted that in different figures, similar or identical elements may be provided with the same reference signs.

### DESCRIPTION OF THE DRAWINGS

The present invention is based on a combination of feature extraction and pattern recognition techniques that allow continuous observability and better decision making during the design and operational phases of the current and future wind turbines, layouts of wind turbine parks etc.

The present invention refers to terms like data, dataset, input data, records, parameters and features.

Data, or dataset, in general refers to sets of data each representing some parameter, where the parameter could be any measured real time or prototype test values, or simulated value, like generated current, power, reactive power etc., more examples will be given later. The input data are the data or dataset inputted to the method according to the present invention. The records refer to the individual entities in the data. The features are features extracted from the input data for the parameters extracted as pieces of information representing the parameters in a compressed form. The extraction of the features is being done by automatic feature extraction methods as also disclosed later.

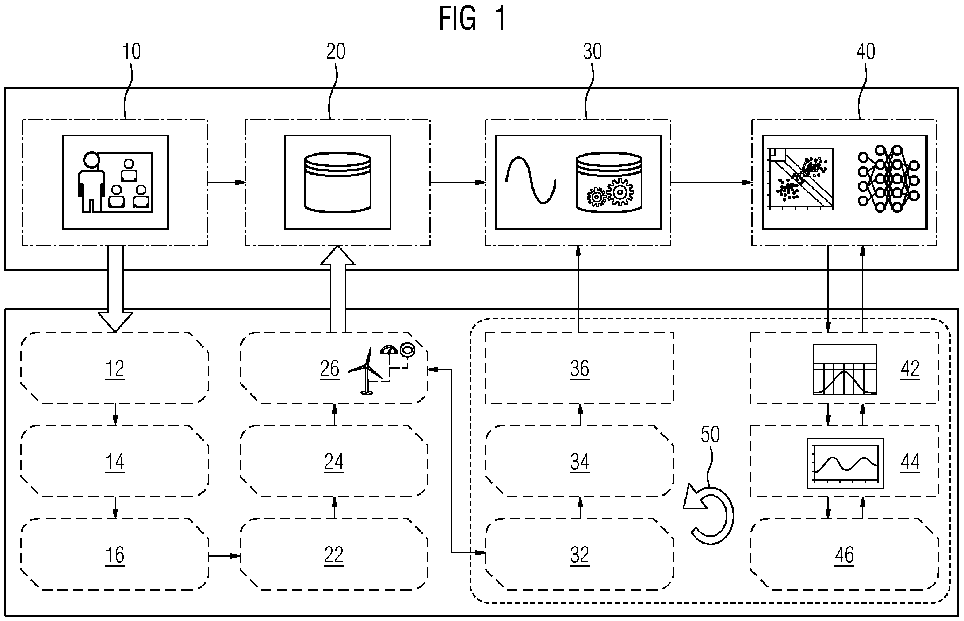

Figure 1 illustrates the overall steps, the use case definition (10), the data sourcing and storage 20 step, the data processing (30) step, and a models generation and evaluation (40) step. The final outcome of the models generation and evaluation (40) step is the final model to be used for the desired purpose, the use case.

The first step, the use case definition 10, relates to defining the application of the model to be generated, and the wanted output from the models generation and evaluation 40 (the general purposes and needed resolutions sub-step 12). This includes defining problems on the development/design phases of e.g. new wind turbines, grid connections, wind parks, as well as the operational phase of already developed and/or installed wind turbines, grid connections, wind parks (thus including a sub-step 14 of defining the relevant area of improvement, e.g. R&D, testing or operational).

Based e.g. these sub-steps 12, 14 a sub-step of definition of data needed, simulation, prototype and/or operational 16 is introduced. E.g., if no actual wind turbines exist or are installed, simulation data are required. For already installed and operational wind turbines input data may be available, or e.g. for prototypes testing is required to obtain input data.

The parameters could be e.g. electrical characteristics like voltage and/or current, active power, reactive power etc., or system parameters like noise of a wind park, vibrations of a wind turbine tower, wake effects etc.

An example where the present invention could be used is for fault Ride-Through (FRT) responses of wind turbines. FRT is part of the many different dynamic responses of a turbine to disturbances in a wind park and grid. Currently, during development, design, testing and operation, large amounts of data regarding FRTs from simulation, tests and in operational turbines are produced and utilized to design of new turbines, and in some cases also for maintenance of operating turbines in the field.

Other examples could include the monitoring, prediction, controlling e.g. of for example wind park and/or wind turbine dynamic characteristics, e.g. noise and other quality problems with harmonic measurements on site.

Other possible problems and challenges in relation to dynamic characteristics (e.g. electrical) can also be targeted by the invention, both at design and control of operation of new wind turbines.

The sub-step 16 of definition of data could also include identifying if to collect existing models etc. relating to e.g. the same application or problem.

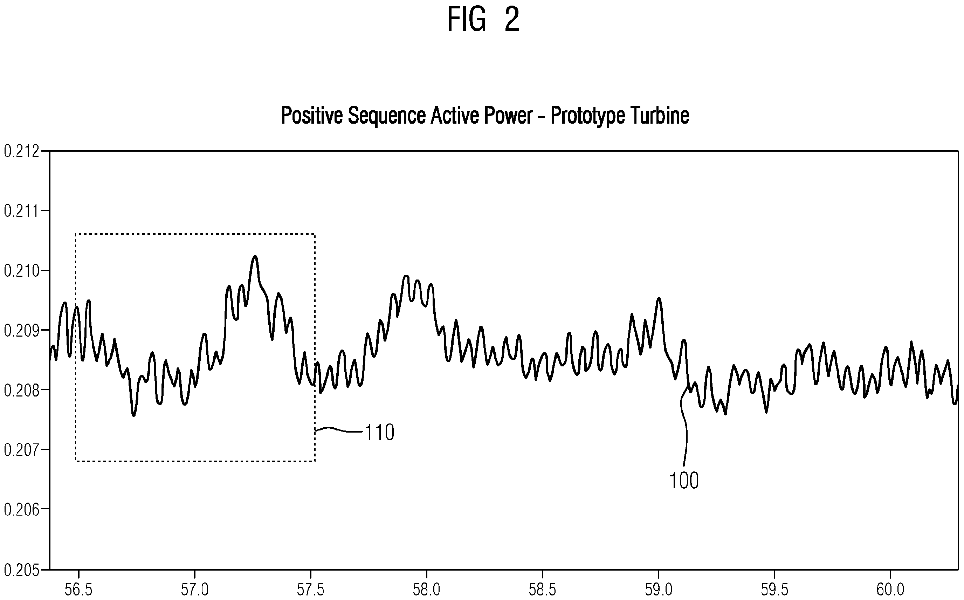

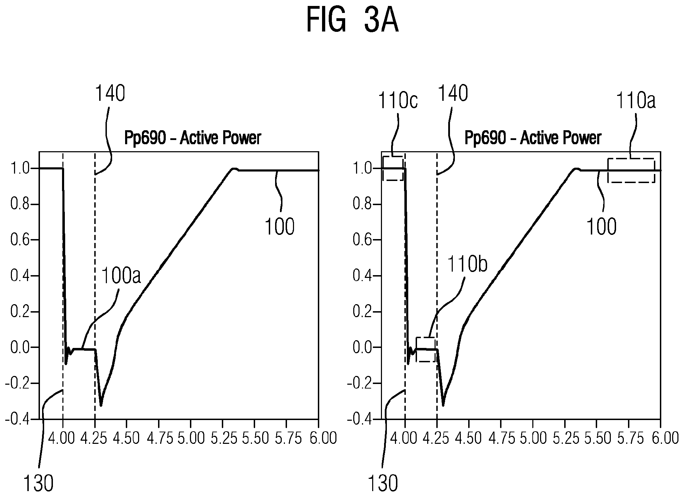

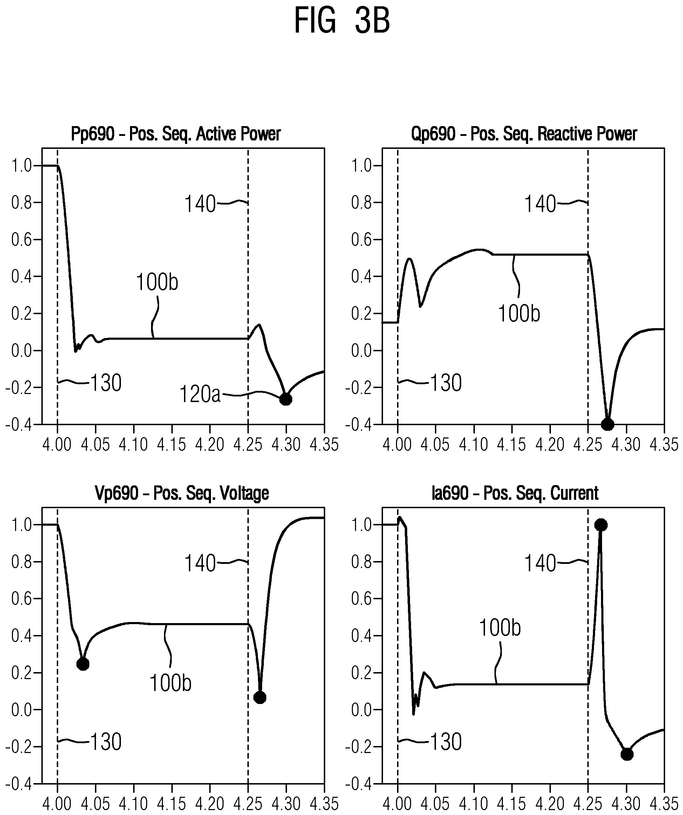

The second step 20 is data sourcing and storage of the needed input data 100 (see also figs. 2 and 3) to be used to generate the model. As also indicated previously, the input data 100 can be generated and/or acquired from different sources, such as by simulation and/or real measurement, or testing of actual real systems (e.g. onsite wind turbines) (the sub-step 24 of acquisition of data through simulation and/or structured query).

A sub-step 26 may include to define the data format, range and source.

The second step 20 could also include a sub-step 22 of data formatting and storing, to translate the data into the right format according to the selected type of storage, and to store the input data for further processing.

On the simulation domains, the data 100 can be obtained for example from root mean square RMS power system models, electromagnetic transient EMT models, or by other models.

The sub-step 24 of acquisition of data could also include collecting existing models etc. relating to e.g. the same application or problem. These in some embodiments form basis as starting points for process according to the present invention, being input for the third step 30, the data processing. Alternatively, or additionally, they can be used as reference for either of the subsequent steps 30, 40 and/or as one of the selection models according to a sub-step 46 of the models generation and evaluation 40.

On the testing domain, the data 100 can be obtained from real systems in actual operations, test installations, prototypes etc.

For example, for wind turbines, the data 100 could be obtained by test wind turbines, test parts of wind turbines, or data from events or continuous data 100 flows can also be obtained from the operational turbines, park controllers and point of common coupling (PCC).

The third step 30 is the data processing pre-process of the simulated or measured input data 100 into pieces of information to be used in the models generation and evaluation step 40. This is a step to link the use cases 10 and input data from different sources 20 to the e.g. machine learning models of step 40, by processing the input data into pieces of information, the features. The features can include for example: minimum and maximum values during transients, averaging filters, standard deviations and variances over a window, down-sampled time series, fast Fourier-transform, etc." The step 30 is included as the nature of the data 100 obtained from step 20 can be different from application to application (or from use case to use case according to step 10) .

The results could be stored in a processor or memory in any form.

Furthermore, the extracted features from the step 30 can also be used for statistical inference on the overall characteristics and/or performance of new wind turbines and can be useful as standalone assets for other decisions to be made.

Time series data, depending on the sampling rate of records in the parameter data, can comprise thousands, tens of thousands or even millions of records. This can make the analysis and use processes heavy and time consuming.

Advantages of the pre-process of the data processing step 30 includes:
- Reduction of the computational burden for machine learning models using only tens or hundreds of features opposed to thousands of data points for time-series data 100.
- Increases the explainability and transparency on evaluating the decision-making process and result of Machine Learning Models, as opposed to using the entire data 100 time series. This is because correlations of values and performance of Machine Learning (ML) models can be more easily mapped into specific variables and stages of the Wind Turbine electrical characteristics.

The data Processing 30 step may include a sub-step 32 of preprocessing of data and calculation of sequence components (in case of multi-phase systems with multi-phase parameters).This could include filtering 110 the input data 100 to remove noise etc. by down-sampling and/or other techniques. Down-sampling itself would reduce the amount of data to be processed.

Based on the filtered data from sub-step 32, or the raw input data 100, a sub-step 34 of splitting the data into sets respectively for the training, validation and testing may a be included to be used in a feature selection sub-step 36.

Subsequently the second data set, the validation data, is used to predict the responses for the observations. At the end, the third data set, the test data, is used to provide an unbiased evaluation of a final model fit on the training data set.

To reduce the complexity and/or the work-load for the models generation and evaluation step 40, a sub-step 36 of feature selection, or extraction, is introduced. This sub-step 36 outputs the extracted features to be used as input for step 40.

Feature Extraction techniques are well-known methods to reduce the number of features in a dataset by creating a set of new features. The new and reduced set of features summarizes the basic information contained in the original dataset.

It is a process of dimensionality reduction by which the initial set of raw data is reduced to more manageable groups for further processing.

This reduces the complexity and redundance of data for model generation 40 requiring less machine power and increases the speed of the learning and generalization steps in machine learning processes.

Automated feature extraction uses specialized algorithms or deep networks for the purpose of extracting features automatically from a raw dataset. Wavelet scattering is an example of automated feature extraction, or more generally there exists specific algorithms publicly available or third-party add-ons. There are also software packages targeting specific software machine learning applications that specialize in feature extraction.

In figures 2 and 3 two different techniques for feature extraction are exemplified.

Figure 2 illustrates the use of (moving) average and median filters where input data 100 are seen fluctuating over time, and where a filter window 110 covering n records is used to create a series of averages of different selections of the full set of records of the input data 100.

This enables to the compression of large amounts of time series data, or records, into smaller pieces that can equally represent certain parameters, such as electrical characteristics like generated power, voltage and/or current, active power, reactive power etc., or system parameters like noise of a wind park, vibrations of a wind turbine tower, wake effects etc. Furthermore, during abnormal and transient conditions, standard deviation and variance can also be extracted from each window 110 to support pattern recognition tools of the models generation and evaluation step 40.

Pattern recognition techniques includes, Machine Learning in general, Statistical Techniques, Structural Techniques, Template Matching, Neural Network Approach, Fuzzy Model etc. Hybrid Models.

Figures 3A and 3B illustrates sections of input data 100 in a situation with dynamic transients 100a in the data 100 (figure 3A), exemplified with a Fault-ride-through (FRT). Filters and/or other techniques in the illustrated embodiment are applied to both before (pre-) 110a, during 110b and after (post-) the fault condition 110c.

During such transient events 100a, the transient period minimum and maximum values (illustrated by the dots 120 in figure 3B) of the event inception (illustrated by line 130) and event clearing (illustrated by line 140) can be extracted as part of the pieces of information data to be used in step 40.

Figure 3B illustrates four signals: positive sequence active and reactive powers as well as positive sequence voltage and current. The list of signals where these can be applied is non-exhaustive.

In another, or additional embodiment, the feature selection 36 data processing 30 uses down-sampling, data splitting (split the data in several smaller pieces), FFT (Fast Fourier Transform) and/or other techniques without directly on the output features, possible excluding using the methods on the input data.

The features generated forms pieces of information to be used in the models generation and evaluation step 40.

The model generation step 40 uses pattern recognition methods, which is a data analysis method that uses e.g. machine learning algorithms to automatically recognize patterns and regularities in inputted data, the collective output pieces of information from step 30.

The model generation and evaluation 40 includes a sub-step 44 including a hyperparameter optimization procedure iterating with an error evaluation sub-step 42.

In machine learning, hyperparameter optimization or tuning is well-known as the problem of choosing a set of optimal hyperparameters for a learning algorithm. A hyperparameter is a parameter whose value is used to control the learning process. By contrast, the values of other parameters (typically node weights) are learned.

In the hyperparameter optimization step 44 the model training runs multiple times to find the best parameters yielding predetermined low errors.

The sub-step 42, the error evaluation, is a step of preparing an error between predicted values by intermediate generated models and actual values of the records in the validation data. This is an iterative operation that continues until an error is achieved being below some defined threshold value.

If the cases of the use case definition 10 e.g. relates to a classification (e.g. Good or Bad, 0 or 1), then the error step can be defined as e.g. an accuracy, precision etc. If cases of the use case definition 10 e.g. relates to a regression (e.g. continuous values between 0.0000 and 100.0000), the error can be taken as the Mean Absolute Error, Root Mean Squared Error, among other types of errors.

In machine learning a wide range of different model types exists. This includes regression models like Linear Regression, Decision Tree, Random Forest, Neural Network models, etc. It also includes classification models like Logistic Regression, Support Vector Machine, Naive Bayes, Decision Tree, Random Forest, Neural Network models, etc. It also includes Unsuper-vised Learning models, like clustering, Dimensionality Reduction, Principal Component Analysis (PCA) models, etc.

In the method, or process, of the present invention, in step 40 a plural of such methods are used to create a set of multiple models chosen from a super-set. The super-set comprises more types of model than to be generated. The model types may be untrained, or empty, models to be used to generate the output models from sub-steps 42 and 44.

The steps 30 and 40 combined forms an iterative process 50 with the purpose to find the best performance of the algorithm, the model to be generated.

In step 40, if by some defined number of iterations of sub-steps 42 and 44 the error is still above the defined threshold value, or by some other means (e.g. the error staring to increase) indicating the model or the features may not be suitable, an iterative step 50 of getting new extracted features from step 30 is introduced. Alternatively, a set of new models are tested if they give better results.

The iterative step 50 in general covers repeating the entire chain of processes of steps 30 and 40 if the initial models yield results far from the desired.

Once a set of useful models are outputted from sub-step 44, in the sub-step 46 of step 40 a comparison between different models is introduced to identify the one giving the best result.

In sub-step 44, the training data from sub-step 34 may be used to train the individual models in the set.

In sub-step 42 the validation data from sub-step 34 may be used to evaluate the error.

In sub-step 46 the test data from sub-step 34 may be used to select the best suitable of the set of models.

## Claims

1. A method to generate a model to test and/or evaluate characteristics of dynamic parameters related to wind turbines and/or wind turbine parks, the method comprising
- a step (20) of data sourcing and storage of input data (100) that includes a plural of records of at least one parameter to be used to generate the model,
- a step (30) of data processing (30) to transform the input data (100) into extracted features that includes a reduced number of records compared to the input data (100) but which are representative of the at least one parameter, and,
- a step (40) of models generation and evaluation including sub-steps (42, 44) to generate a set of multiple models and a sub-step (46) of selecting the best suitable of the models.

2. A method according to claim 1, wherein the method is used in relation grid compliance related dynamic characteristic of wind turbines.

3. A method according to claim 1 or 2, wherein the method is used on input data (100) of electrical parameters with a fast dynamic, such as within order of minutes, seconds, milli-seconds, micro-seconds, or nano-seconds.

4. A method according to claim 1, 2 or 3, wherein if the input data (100) includes records from fault or abnormal situations like fault-ride-trough, where the filters (110) are applied to the records before (110a), during (110b) and after the fault or abnormal (110c) condition.

5. A method according to claim 4, wherein the number of records in the filter window (110) are not constant.

6. A method according to any of the preceding claims, wherein the method is used in relation to data originating from Fault Ride-Through (FRT) responses of wind turbines, phase-jumps, rate of frequency change.

7. A method according to claim 4, 5 or 6, wherein for transient events where the input data include records (100a) for fault or abnormal situations, the standard deviation and/or variance of the input data (100) is extracted from each window (110) as part of the extracted features.

8. A method according to claim 4, 5, 6 or 7, wherein transient events where the input data include records(100a) fault or abnormal situations, the transient period minimum and maximum values of the event inception and event clearing are extracted as part of the pieces extracted features.

9. A method according to any of the preceding claims, wherein the features are prepared using (moving) average and/or median filters where a filter window (110) covers a plural of input data (100) records of at least one parameter, and where a filter window (110) covering n records is used to create a series of averages of different selections of the full set of data (100) records

10. A method according to any of the preceding claims, wherein the method uses time-series of the positive and negative sequence of voltage to replicate the dynamic response of the wind turbine.

11. A method according to claim 1, the set of models are selected among a larger super-set of model types.

12. A method according to any of the preceding claims, wherein the step (40) uses pattern recognition techniques such as machine learning.

13. A method according to any of the preceding claims, wherein step (30) includes a sub-step (32) of filtering the input data (100) to remove noise.

14. A method according to any of the preceding claims, wherein step (30) includes a sub-step (34) of splitting the input data (100) sets of extracted features for the training in sub-step (44), the validation in sub-step (42) and the testing in sub-step (44).

15. A controller or processor used in connection to a wind turbine and/or wind turbine park and adapted to use the method of any of claims 1-14.
